(19) Europäisches Patentamt

European Patent Office

Office européen des brevets

(11) **EP 4 692 906 A1**

(12) **EUROPEAN PATENT APPLICATION**

(43) Date of publication:
**11.02.2026 Bulletin 2026/07**

(21) Application number: 24193160.9

(22) Date of filing: **06.08.2024**

(51) International Patent Classification (IPC):
**G02C 7/02** *(2006.01)*

(52) Cooperative Patent Classification (CPC):
**G02C 7/022;** G02C 2202/24

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Carl Zeiss Vision International GmbH 73430 Aalen (DE)**

(72) Inventors:
• **Sankaridurg, Padmaja Rajagopal Maroubra, 2035 (AU)**
• **Ohlendorf, Arne 73430 Aalen (DE)**
• **Karim, Waiz 73430 Aalen (DE)**
• **Sharifi, Hamed 73430 Aalen (DE)**

(74) Representative: **Carl Zeiss AG - Patentabteilung Carl-Zeiss-Straße 22 73447 Oberkochen (DE)**

(54) **SPECTACLE LENS COMPRISING RING-SHAPED STRUCTURES**

(57) The invention relates to a spectacle lens comprising a connected zone and a plurality of ring-shaped structures, said connected zone surrounding an optical centre of the spectacle lens or a fitting point of the spectacle lens, said optical centre as defined in ISO 13666:2019(E), entry 3.2.15, said fitting point of said spectacle lens as defined in ISO 13666:2019(E), entry 3.2.34, each ring-shaped structure of said plurality of ring-shaped structures having a surface power that is different to a surface power of a surface of the spectacle lens comprising a ring-shaped structure of said plurality of ring-shaped structures outside a respective domain of each ring-shaped structure of said plurality of ring-shaped structures, the spectacle lens being characterized in that said ring-shaped structure of said plurality of ring-shaped structures comprises a diffuse zone having a diffuse transmittance that is different to a diffuse transmittance of said ring-shaped structure of said plurality of ring-shaped structures, diffuse transmittance as defined in CIE S 017:2020, entry 17-24-069.

Fig. 1

## Description

Field of the invention

The present invention relates to a spectacle lens according to the preamble of claim 1 and a method configured for calculating, by a computer, data of a spectacle lens for the purpose of a use of the data for a manufacture of the spectacle lens according to the preamble of claim 10.

Related prior art

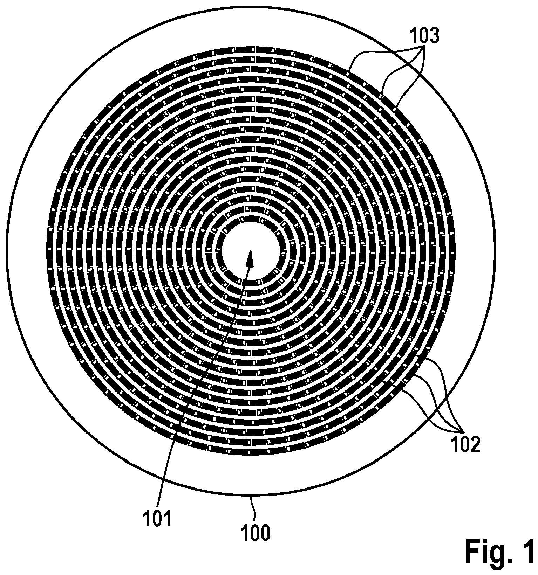

WO 2023/156052 A1 discloses a spectacle lens comprising one or more ring-shaped focusing structures or one or more ring-shaped diffusing structures, a respective innermost ring-shaped structure surrounding according to Figure 1 and according to Figure 3 a central clear zone.

WO 2020/180817 A1 discloses forming both lenslets and scattering centres on a same ophthalmic lens surface in the same laser exposure process by varying the nature of the exposure. With respect to Figure 14, WO 2020/180817 A1 discloses that scattering centres are included at the locations of lenslets.

Problem to be solved

Based on WO 2020/180817 A1, Figure 14 in connection with WO 2020/180817 A1, page 33, lines 1 to 4 disclosing that "[s]cattering centres are included at the locations of lenslets 1435. For example, scattering centres can be formed on a surface of each lenslet 1435, on the opposite lens surface but overlapping with the same lateral positions as lenslets 1435, and/or included within the bulk of lens 1400 overlapping laterally with lenslets 1435", the problem to be solved by the present invention is to provide a spectacle lens with comfortable or increased wearability for a spectacle lens wearer.

Summary of the invention

The problem has been solved by the spectacle lens according to claim 1 and the method according to claim 10.

The spectacle lens comprises a connected zone and a plurality of ring-shaped structures, said connected zone surrounding an optical centre of the spectacle lens or a fitting point of the spectacle lens, said optical centre as defined in ISO 13666:2019(E), entry 3.2.15, said fitting point as defined in ISO 13666:2019(E), entry 3.2.34, each ring-shaped structure of said plurality of ring-shaped structures has a surface power that is different to a surface power of a surface of the spectacle lens comprising a ring-shaped structure of said plurality of ring-shaped structures outside a respective domain of each ring-shaped structure of said plurality of ring-shaped structures, the spectacle lens is characterized in that said ring-shaped structure of said plurality of ring-shaped structures comprises a diffuse zone having a diffuse transmittance that is different to a diffuse transmittance of said ring-shaped structure, diffuse transmittance as defined in CIE S 017:2020, entry 17-24-069.

A "spectacle lens" is as defined in ISO 13666:2019(E), entry 3.5.2, an ophthalmic lens (3.5.1) worn in front of, but not in contact with, an eyeball. The spectacle lens preferably is a finished spectacle lens, the finished spectacle lens as defined in ISO 13666:2019(E), entry 3.8.7, as spectacle lens (3.5.2) of which both sides have their final optical surface. As in note 1 to entry 3.8.7 of ISO 13666:2019(E), the finished spectacle lens can be either edged (cut) or uncut. The spectacle lens preferably is selected from one of the group consisting of

- a single-vision spectacle lens as defined in ISO 13666:2019(E), entry 3.7.1, as spectacle lens (3.5.2) designed to provide a single dioptric power (3.10.3),
- a position-specific single-vision spectacle lens as defined in ISO 13666:2019(E), entry 3.7.2, as single-vision spectacle lens (3.7.1), generally with complex surface geometry, that needs to be positioned accurately according to an ordered specification and bears permanent alignment reference markings (3.15.25). As in note 1 to entry 3.7.2 of ISO 13666:2019(E), an example of position-specific single-vision spectacle lenses are those single-vision spectacle lenses (3.7.1) calculated to take into account an as-worn position (3.2.36) and therefore requiring accurate mounting in front of a wearer's eye.

A "connected zone" is a domain of the spectacle lens, said domain cannot be split up into two or a plurality of independent, not connected zones. Preferably, the connected zone is the domain on a surface of the spectacle lens, said domain cannot be split up into two or a plurality of independent, not connected zones. The surface of the spectacle lens preferably is either a front surface of the spectacle lens or a back surface of the spectacle lens, the front surface of the spectacle lens as defined in ISO 13666:2019(E), entry 3.2.13, the back surface of the spectacle lens as defined in ISO 13666:2019(E), entry 3.2.14. The surface of the spectacle lens may be selected from the group consisting of a spherical surface as defined in ISO 13666:2019(E), entry 3.4.1, a cylindrical surface as defined in ISO 13666:2019(E), entry 3.4.2, an aspherical surface as defined in ISO 13666:2019(E), entry 3.4.3, a toroidal surface as defined in ISO 13666:2019(E), entry 3.4.6, an atoroidal surface as defined in ISO 13666:2019(E), entry 3.4.7, a power-variation surface as defined in ISO 13666:2019(E), entry 3.4.10.

Preferably, the connected zone is structure-free, i.e., the connected zone does not comprise any structure. A structure is a domain of the spectacle lens having a surface power different to a surface power of the surface of the spectacle lens comprising said structure outside the domain of the structure. In other words, the structure is the domain of the surface of the spectacle lens having the surface power different to the surface power of the surface of the spectacle lens comprising said structure outside the domain of the structure. Outside the domain of the structure preferably is a domain of the spectacle lens that is in a vicinity of said structure. Preferably, outside the domain of the structure is a domain on the surface of the spectacle lens comprising said structure in a vicinity of said structure. In other words, the domain of the structure on the surface of the spectacle lens is separated from the domain of said surface of the spectacle lens that is outside and in the vicinity of said structure by an onset line passing each onset of the structure, an onset of the structure representing along any direction from an optical centre towards a periphery of the spectacle lens or along any direction from a fitting point towards a periphery of the spectacle lens a first position and a last position in which a surface of said structure deviates in surface power from said surface of the spectacle lens. The surface power of the structure is defined analogously as in ISO 13666:2019(E), entry 3.10.4, as local ability of a surface of the structure to change a vergence of a bundle of rays incident at said surface of said structure in any position of said structure. As in note 1 to entry 3.10.4 of ISO 13666:2019(E), the surface power of the structure is determined from a radius or radii of the surface of the ring-shaped structure and a refractive index (3.1.5) of a material of the structure, and is calculated for light (3.1.2) incident or emergent in air. The surface power of the surface of the spectacle lens is defined analogously as in ISO 13666:2019(E), entry 3.10.4, as local ability of the surface of the spectacle lens to change a vergence of a bundle of rays at the surface in any position of said surface of the spectacle lens. Analogously as in note 1 to entry 3.10.4 of ISO 13666:2019(E), the surface power of the surface of the spectacle lens is determined from a radius or radii of the surface and a refractive index (3.1.5) of the optical material (3.3.1) of the spectacle lens, and is calculated for light (3.1.2) incident or emergent in air.

A transmittance of the structure and a transmittance of the vicinity of the structure may be the same or may be different to each other, the transmittance as defined in CIE S 017:2020, entry 17-24-065. Preferably, the structure and the vicinity of the structure are different in surface power and are not different in transmittance, the transmittance as defined in CIE S 017:2020, entry 17-24-065. Preferably, a structure-free connected zone of the spectacle lens is calculated to provide an ordered power for correcting a wearer's vision, the ordered power as defined in ISO 13666:2019(E), entry 3.10.14. Thus, the structure-free connected zone of the spectacle lens is a domain of the spectacle lens comprising each x,y position that is comprised in said structure-free connected zone of both the front surface and the back surface of the spectacle lens.

Preferably, the transmittance of the structure-free connected zone is same as in any structure-free domain of the spectacle lens, i.e. as in any domain of the spectacle lens that does not comprise any structure, the transmittance as defined in CIE S 017:2020, entry 17-24-065.

The connected zone surrounds or encircles the optical centre of the spectacle lens or the fitting point of the spectacle lens, meaning there is a path within the connected zone that surrounds or encircles said optical centre or said fitting point, said path begins in a point within the connected zone and ends in said point again.

Preferably, along any direction from the optical centre towards the periphery of the spectacle lens or along any direction from the fitting point towards the periphery of the spectacle lens the connected zone is limited by an inner onset line passing each inner onset of an innermost ring-shaped structure of the plurality of ring-shaped structures, said innermost ring-shaped structure of said plurality of ring-shaped structures surrounding or encircling the optical centre of the spectacle lens or the fitting point of the spectacle lens. Along any direction from the optical centre towards the periphery of the spectacle lens or along any direction from the fitting point towards the periphery of the spectacle lens an inner onset represents a first position in which a surface of the innermost ring-shaped structure of the plurality of ring-shaped structures that surrounds or encircles the optical centre or the fitting point deviates from the surface of the spectacle lens comprising said innermost ring-shaped structure. Preferably, the connected zone has a width, i.e., a maximum expansion between inner onsets of said innermost ring-shaped structure surrounding or encircling the optical centre or the fitting point of the spectacle lens, selected from one of the following ranges:

- the width of the connected zone being in a range of from 4 mm to 10 mm,
- the width of the connected zone being in a range of from 5 mm to 9 mm,
- the width of the connected zone being in a range of from 5.5 mm to 8.5 mm,
- the width of the connected zone being in a range of from 6 mm to 8 mm.

Preferably, the connected zone is a simply connected zone. The simply connected zone is a domain of the spectacle lens, said domain is path-connected and every path between two points in said domain can be continuously transformed into any other such path while preserving said two points. Preferably, the simply connected zone is the domain on the surface of the spectacle lens, said domain on said surface being path-connected and every path between two points in said domain can be continuously transformed into any other such path while preserving said two points.

Preferably, the simply connected zone is structure-free, i.e., the simply connected zone does not comprise any structure. In other words, the structure-free simply connected zone of the spectacle lens is calculated to provide the ordered power for correcting a wearer's vision. Thus, a structure-free simply connected zone of the spectacle lens is a domain of the spectacle lens comprising each x,y position that is comprised in said structure-free simply connected zone of both the front surface and the back surface of the spectacle lens.

The simply connected zone preferably comprises the optical centre of the spectacle lens or the fitting point of the spectacle lens. Preferably, along any direction from the optical centre towards the periphery of the spectacle lens or along any direction from the fitting point towards the periphery of the spectacle lens the simply connected zone is limited by the inner onset line passing each inner onset of the innermost ring-shaped structure of the plurality of ring-shaped structures. Along any direction from the optical centre towards the periphery of the spectacle lens or along any direction from the fitting point towards the periphery of the spectacle lens the inner onset represents the first position in which the surface of the innermost ring-shaped structure deviates in surface power from the surface of the spectacle lens comprising said innermost ring-shaped structure.

The "optical centre" of the spectacle lens is as defined in ISO 13666:2019(E), entry 3.2.15, an intersection of an optical axis (3.1.8) with a front surface (3.2.13) of the spectacle lens (3.5.2).

The "fitting point" of the spectacle lens is as defined in ISO 13666:2019(E), entry 3.2.34, a point on a front surface (3.2.13) of the spectacle lens (3.5.2) stipulated by a manufacturer for positioning the spectacle lens in front of an eye.

According to note 1 to entry 3.2.30 (centration point) of 13666:2019(E), the optical centre (3.2.15) usually applies to the single-vision spectacle lens (3.7.1), the fitting point (3.2.34) usually to the position-specific single-vision spectacle lens (3.7.2). Further, according to ISO 8980-1:2017(E), entry 7.1, position-specific single-vision spectacle lenses shall have permanent alignment reference marking comprising two marks located nominally 34 mm apart, equidistant to a vertical plane through the fitting point.

An x,y position preferably is defined in an x,y,z coordinate system, the x,y,z coordinate system preferably is defined as follows: A predefined point of the spectacle lens defines an origin of the x,y,z coordinate system and i) a surface normal or ii) a primary direction at said predefined point defines a z direction. An x,y direction is in a plane perpendicular to said surface normal or said primary direction. In said plane perpendicular to said surface normal or said primary direction an x direction and a y direction are perpendicular to each other. Said predefined point preferably is selected from the group consisting of the optical centre of the spectacle lens and the fitting point of the spectacle lens. The primary direction of the spectacle lens is as defined in ISO 13666:2019(E), entry 3.2.25, a direction of a line of sight (3.2.24), usually taken to be a horizontal, to an object at an infinite distance measured with habitual head and body posture when looking straight ahead in unaided vision.

"A" ring-shaped structure of said plurality of ring-shaped structures preferably comprises one of the following alternatives:

- One ring-shaped structure of said plurality of ring-shaped structures, said one ring-shaped structure comprises a diffuse zone having a diffuse transmittance that is different to a diffuse transmittance of said one ring-shaped structure, diffuse transmittance as defined in CIE S 017:2020, entry 17-24-069, or

- more ring-shaped structures of said plurality of ring-shaped structures, a same ring-shaped structure of said more ring-shaped structures comprises a diffuse zone having a diffuse transmittance that is different to a diffuse transmittance of said same ring-shaped structure of said more ring-shaped structures, diffuse transmittance as defined in CIE S 017:2020, entry 17-24-069, or

- each ring-shaped structure of said plurality of ring-shaped structures, a same ring-shaped structure of said plurality of ring-shaped structures comprises a diffuse zone having a diffuse transmittance that is different to a diffuse transmittance of said same ring-shaped structure of said plurality of ring-shaped structures, diffuse transmittance as defined in CIE S 017:2020, entry 17-24-069.

The diffuse transmittance of the diffuse zone is as defined in CIE S 017:2020, entry 17-24-069. The diffuse transmittance of the ring-shaped structure is as defined in CIE S 017:2020, entry 17-24-069.

A "ring-shaped" structure is defined as a structure having a path within said structure that surrounds a structure-free domain of said structure from a point within said structure and ends in said point again. The structure-free domain of the ring-shaped structure is at least one of

i) a domain of the spectacle lens encircled or surrounded by said ring-shaped structure, said domain being outside a domain of said ring-shaped structure and outside a respective domain of any ring-shaped structure, preferably the structure-free domain is in a vicinity of said ring-shaped structure, preferably said domain of the spectacle lens encircled or surrounded by said ring-shaped structure is separated from the domain of said ring-shaped structure by the inner onset line of said ring-shaped structure passing each inner onset along any direction from the optical centre towards the periphery of the spectacle lens or along any direction from the fitting point towards the periphery of the spectacle lens,

ii) a domain of the surface of the spectacle lens encircled or surrounded by said ring-shaped structure, said domain being outside a domain of said ring-shaped structure and outside a respective domain of any ring-shaped structure, preferably the structure-free domain is in a vicinity of said ring-shaped structure, preferably said domain of the surface of the spectacle lens encircled or surrounded by said ring-shaped structure is separated from said ring-shaped structure by the inner onset line of said ring-shaped structure passing each inner onset along any direction from the optical centre towards the periphery of the spectacle lens or along any direction from the fitting point towards the periphery of the spectacle lens.

Preferably, the transmittance of the structure-free domain of the ring-shaped structure is same as the transmittance of any structure-free domain of the spectacle lens, i.e. as of any domain of the spectacle lens that does not comprise any structure, the transmittance as defined in CIE S 017:2020, entry 17-24-065.

A ring-shaped "structure" is a domain of the spectacle lens having a surface power different to a surface power of the surface of the spectacle lens comprising said ring-shaped structure outside the domain of said ring-shaped structure. Preferably, the ring-shaped structure is the domain of the spectacle lens having the surface power different to the surface power of the surface of the spectacle lens comprising said ring-shaped structure outside the domain of said ring-shaped structure. Outside the domain of the ring-shaped structure preferably is the structure-free domain of the ring-shaped structure. With respect to the outermost ring-shaped structure, i.e. the ring-shaped structure that is not surrounded or encircled by a more peripheral ring-shaped structure along any direction from the optical centre or the fitting point towards the periphery of the spectacle lens, outside the domain of the ring-shaped structure preferably is the structure-free domain of said outermost ring-shaped structure and a domain of the surface of the spectacle lens in the vicinity of said outermost ring-shaped structure surrounding or encircling said outermost ring-shaped structure.

The surface power of the ring-shaped structure is defined analogously as in ISO 13666:2019(E), entry 3.10.4, as local ability of a surface of said ring-shaped structure to change a vergence of a bundle of rays incident at said surface of the ring-shaped structure in any position of said surface of said ring-shaped structure. As in note 1 to entry 3.10.4 of ISO 13666:2019(E), the surface power of the ring-shaped structure is determined from a radius or radii of the surface of the ring-shaped structure and a refractive index (3.1.5) of a material of the ring-shaped structure, and is calculated for light (3.1.2) incident or emergent in air. The surface power of the surface of the spectacle lens is defined analogously as in ISO 13666:2019(E), entry 3.10.4, as mentioned before.

The surface of the ring-shaped structure may be selected from one of the following surfaces or may be pieced together from parts selected from one or more of the following parts:

- one part or more parts of a spherical surface, the spherical surface as defined in ISO 13666:2019(E), entry 3.4.1
- a cylindrical surface as defined in ISO 13666:2019(E), entry 3.4.2
- one part or more parts of a cylindrical surface
- one part or more parts of an aspherical surface, the aspherical surface as defined in ISO 13666:2019(E), entry 3.4.3
- one part or more parts of a toroidal surface, the toroidal surface as defined in ISO 13666:2019(E), entry 3.4.6
- one part or more parts of an atoroidal surface, the atoroidal surface as defined in ISO 13666:2019(E), entry 3.4.7
- a power-variation surface as defined in ISO 13666:2019(E), entry 3.4.10
- one part or more parts of a power-variation surface.

Preferably, the surface of the ring-shaped structure is (i) cylindrical or (ii) with a variation of surface power over part or all of its area, without discontinuity, or pieced together from at least one of (iii) one part or more parts of the cylindrical surface and (iv) one part or more parts of the power-variation surface.

The ring-shaped structure is limited by two onset lines. Along any direction from the optical centre towards the periphery of the spectacle lens or along any direction from the fitting point towards the periphery of the spectacle lens the ring-shaped structure is limited by an inner onset line passing each inner onset and an outer onset line passing each outer onset of said ring-shaped structure. Along any direction from the optical centre towards the periphery of the spectacle lens or along any direction from the fitting point towards the periphery of the spectacle lens the inner onset represents a first position in which the surface of the ring-shaped structure deviates in surface power from the surface of the spectacle lens comprising the ring-shaped structure. Along any direction from the optical centre towards the periphery of the spectacle lens or along any direction from the fitting point towards the periphery of the spectacle lens an outer onset represents a last position in which the surface of the ring-shaped structure deviates in surface power from the surface of the spectacle lens comprising the ring-shaped structure.

Outside a domain of the diffuse zone of a same ring-shaped structure, the transmittance of the ring-shaped structure may or may not differ from the transmittance of the structure-free domain of the ring-shaped structure, the transmittance as defined in CIE S 017:2020, entry 17-24-065. Outside the domain of the diffuse zone of the same ring-shaped structure, the transmittance of the ring-shaped structure may or may not differ from the transmittance of any structure-free domain of the spectacle lens, i.e. any domain of the spectacle lens that does not comprise any structure, the transmittance as defined in CIE S 017:2020, entry 17-24-065. Preferably, outside the domain of the diffuse zone of the same ring-shaped structure, the transmittance of the ring-shaped structure is the same as the transmittance of the structure-free domain of the ring-shaped structure and the same as the transmittance of any structure-free domain of the spectacle lens, the transmittance as defined in CIE S 017:2020, entry 17-24-065.

Each ring-shaped structure of the plurality of ring-shaped structures preferably has a respective width. The width of a same ring-shaped structure of the plurality of ring-shaped structures designates a distance between the inner onset and the outer onset of said same ring-shaped structure along any direction perpendicular to a circumferential direction of said same ring-shaped structure. The circumferential direction of a same ring-shaped structure is defined by a central path between the onset lines of said same ring-shaped structure.

The width of the same ring-shaped structure of the plurality of ring-shaped structures may be constant or non-constant. Preferably, the width of the same ring-shaped structure of the plurality of ring-shaped structures is constant. The width of the same ring-shaped structure is its constant width if each distance between the inner onset and the outer onset of said same ring-shaped structure along any direction perpendicular to the circumferential direction of said same ring-shaped structure is identical. A maximum width of the same ring-shaped structure is a maximum distance between the inner onset and the outer onset of said same ring-shaped structure along any direction perpendicular to the circumferential direction of said same ring-shaped structure. For the same ring-shaped structure with the constant width the maximum width is the constant width.

Preferably, a maximum width of the same ring-shaped structure is selected from one of the following ranges:

- the maximum width is in a range of 0.2 mm to 4 mm,
- the maximum width is in a range of 0.3 mm to 3.5 mm,
- the maximum width is in a range of 0.4 mm to 3 mm,
- the maximum width is in a range of 0.5 mm to 2.5 mm,
- the maximum width is in a range of 0.6 mm to 1.8 mm.

Each ring-shaped structure of the plurality of ring-shaped structures may be circular-shaped, for example both the inner onset line and the outer onset line of a same ring-shaped structure of said plurality of ring-shaped structures may be circular-shaped and may be concentric.

Each ring-shaped structure of the plurality of ring-shaped structures may be circular-shaped and may be centered on the optical centre or the fitting point of the spectacle lens.

Preferably, a ratio between a sum of areas of domains of the plurality of ring-shaped structures divided by the total sum of areas of domains of the spectacle lens, said total sum of areas of domains of the spectacle lens summing up the sum of areas of domains of the plurality of ring-shaped structures and a sum of areas of structure-free domains limited, along any direction from the optical centre or the fitting point towards the periphery of the spectacle lens, by the outer onset line and the inner onset line of neighbouring ring-shaped structures, is selected from one of the following ratios:

- the ratio is in a range of 20% to 70%,
- the ratio is in a range of 25% to 65%,
- the ratio is in a range of 30% to 60%,
- the ratio is in a range of 35% to 55%.

A distance between closest neighbouring ring-shaped structures of the plurality of ring-shaped structures, i.e. in any direction from the optical centre or the fitting point towards the periphery of the spectacle lens the distance between the outer onset of a ring-shaped structure and a closest inner onset of a closest neighbouring ring-shaped structure may be selected from one of the following ranges:

- the distance is in a range of 0.2 mm to 1.8 mm,
- the distance is in a range of 0.3 mm to 1.7 mm,
- the distance is in a range of 0.4 mm to 1.6 mm,
- the distance is in a range of 0.5 mm to 1.5 mm.

The "transmittance", $\tau$, is as defined in CIE S 017:2020, entry 17-24-065, a quotient of transmitted radiant flux, $\Phi_t$, and incident radiant flux, $\Phi_m$.

$$\tau = \frac{\Phi_t}{\Phi_m}$$

As in note 3 to entry 17-24-065 of CIE S 017:2020, transmittance, $\tau$, is a sum of regular transmittance, $\tau_r$, and diffuse transmittance, $\tau_d$.

$$\tau = \tau_r + \tau_d$$

Regular transmittance, $\tau_r$, is defined as quotient of a regularly transmitted part of the (whole) transmitted flux and the incident flux.

The "diffuse transmittance", $\tau_d$, is as defined in CIE S 017:2020, entry 17-24-069, a quotient of a diffusely transmitted part of a (whole) transmitted flux and incident flux.

Diffuse transmittance may be induced in the diffuse zone of a same ring-shaped structure of the plurality of ring-shaped structure by a) narrow angle scatter or b) wide angle scatter (haze). The narrow angle scatter is as defined in ISO 4007:2018(E), entry 3.8.15, forward scattered light (3.8.14) that deviates within a cone, with apex at a point of incidence and subtending less than 2.5° from an expected direction of propagation. The wide angle scatter is as defined in ISO 4007:2018(E), entry 3.8.16, forward scattered light (3.8.14) that deviates through angles of more than 2.5° from an expected direction of propagation.

"A" diffuse zone preferably comprises one of the following alternatives:

- One diffuse zone of a same ring-shaped structure of said plurality of ring-shaped structures, or
- a plurality of diffuse subzones of a same ring-shaped structure of said plurality of ring-shaped structures. Mutually different diffuse subzones of said plurality of diffused subzones zones of said same ring-shaped structure are distanced to each other along a circumferential direction said same ring-shaped structure and/or in a direction perpendicular to the circumferential direction of said same ring-shaped structure.

The "diffuse zone" is i) one domain of a same ring-shaped structure of the plurality of ring-shaped structures, said one domain having the diffuse transmittance that is different to the diffuse transmittance of said same ring-shaped structure at each x,y position inside said one domain of said diffuse zone or ii) a plurality of domains of a same ring-shaped structure of the plurality of ring-shaped structures, each domain of said plurality of domains having the diffuse transmittance that is different to the diffuse transmittance of said same ring-shaped structure at each x,y position inside each of said domains of said plurality of domains of said diffuse zone. In other words, the diffuse zone is i) the one domain inside the domain of the same ring-shaped structure, the one domain of the diffuse zone having the diffuse transmittance that is different to the diffuse transmittance of said same ring-shaped structure at each x,y position inside said one domain of said diffuse zone or ii) the plurality of domains inside the domain of the same ring-shaped structure, each domain of the plurality of domains of the diffuse zone having the diffuse transmittance that is different to the diffuse transmittance of said same ring-shaped structure at each x,y position inside each domain of said plurality of domains of said diffuse zone. Each x,y position of the one domain of the diffuse zone is comprised in the domain of the same ring-shaped structure. Each x,y position of each domain of the plurality of domains of the diffuse zone is comprised in the domain of the same ring-shaped structure.

The diffuse zone is limited by an onset line passing each onset of the diffuse zone, an onset of the diffuse zone representing along any direction from a centroid of the diffuse zone towards a periphery of the diffuse zone a last position in which the diffuse transmittance of the domain of the diffuse zone differs from the diffuse transmittance of the domain of a same ring-shaped structure of the plurality of ring-shaped structures, each x,y position of the domain of the diffuse zone is comprised in the domain of the same ring-shaped structure.

One diffuse zone is one domain of a same ring-shaped structure of the plurality of ring-shaped structures, said one domain having the diffuse transmittance that is different to the diffuse transmittance of said same ring-shaped structure at each x,y position inside said one domain of said diffuse zone. In other words, the one diffuse zone is the one domain inside the domain of the same ring-shaped structure, the one domain of the diffuse zone having the diffuse transmittance that is different to the diffuse transmittance of said same ring-shaped structure at each x,y position inside said one domain of said diffuse zone.

The one diffuse zone is limited by an onset line passing each onset of the one diffuse zone, an onset of the one diffuse zone representing, along any direction from a centroid of the one diffuse zone towards a periphery of the one diffuse zone, a last position in which the diffuse transmittance of the one domain of the one diffuse zone differs from the diffuse transmittance of the domain of a same ring-shaped structure of the plurality of ring-shaped structures. Each x,y position of the one domain of the one diffuse zone is comprised in the domain of the same ring-shaped structure.

Each diffuse subzone of the plurality of diffuse subzones is a domain of a same ring-shaped structure of the plurality of ring-shaped structures, said domain having the diffuse transmittance that is different to the diffuse transmittance of said ring-shaped structure at each x,y position inside the domain of a respective diffuse subzone of the plurality of diffuse subzones. In other words, each diffuse subzone of the plurality of diffuse subzones is the domain inside the domain of the same ring-shaped structure, the domain of the respective diffuse subzone of the plurality of diffuse subzones having the diffuse transmittance that is different to the diffuse transmittance of said same ring-shaped structure at each x,y position inside said the domain of the respective diffuse subzone of the plurality of diffuse subzones.

Each diffuse subzone of the plurality of diffuse subzones is limited by an onset line passing each onset of a respective diffuse subzone of the plurality of diffuse subzones, an onset of the respective diffuse subzone representing, along any direction from a centroid of the respective diffuse subzone towards a periphery of the respective diffuse subzone, a last position in which the diffuse transmittance of the domain of the respective diffuse subzone differs from the diffuse transmittance of the domain of a same ring-shaped structure of the ring-shaped structures. Each x,y position of the domain of the respective diffuse subzone of the plurality of diffuse subzones is comprised in the domain of the same ring-shaped structure.

The problem has been solved by the spectacle lens described before. WO 2023/156052 A2 provides in Table 1 data concerning the "satisfaction of wearability".

WO 2023/156052 A2 describes on page 20, line 5 to 11, "[t]he subjects of a study evaluated said design characteristics in a range from 1 to 10, wherein 10 equals to best possible wearability of a spectacle lens (e.g., a single vision spectacle lens with a length-based fill factor of 0%) and 1 equals to the worst possible wearability of a spectacle lens (e.g., a single vision spectacle lens with a length-based fill factor of 100%). A satisfaction of wearability greater or equal to 4.0 is considered as sufficient, hence the children would probably accept such lenses with said satisfaction of wearability and would probably not tend to dismiss the spectacle lens". In other words, a spectacle lens that comprises design features that act on current theories for myopia progression, in particular in children, and that are known for being efficient in retarding or even preventing a progression of myopia, in particular in children, is useless when a spectacle lens wearer does not wear such a spectacle lens. Table 1 of WO 2023/156052 A2 clearly shows that for spectacle lenses that are intended to be used to prevent myopia progression, in particular in children, a point that should not be neglected with respect to said spectacle lenses and the respective data of said spectacle lenses is, that such spectacle lenses provide a certain degree of comfort in wearing, i.e. comfortable wearability, and therefore is worn. WO 2023/156052 A2 assumes that comfortable wearability goes along with structure-free clear zones. A comparison between lens 1 and lens 8 of Table 1 of WO 2023/156052 A2 shows an increased zylinder width, i.e. an increased width of a ring-shaped focusing structure, from 0.5 mm for lens 1 to 0.7 mm for lens 8, whereas for both lenses, lens 1 and lens 8, a pitch is 1 mm. This means that a distance between two ring-shaped focusing structures is 0.5 mm for lens 1 and 0.3 mm for lens 8. This decrease in distance between two ring-shaped focusing structures leads to a decreased satisfaction of wearability from 6.1 for lens 1 to 4.3 for lens 8. A comparison between lens 2 and lens 6 of Table 1 of WO 2023/156052 A2 shows an increased zylinder width, i.e. an increased width of a ring-shaped focusing structure, from 0.6 mm for lens 2 to 0.84 mm for lens 6, whereas for both lenses, lens 2 and lens 6, a pitch is 1.2 mm. This means that a distance between two ring-shaped focusing structures is 0.6 mm for lens 2 and 0.36 mm for lens 6. This decrease in distance between two ring-shaped focusing structures leads to a decreased satisfaction of wearability from 5.7 for lens 2 to 4.3 for lens 6. In other words, the smaller the distance between neighbouring ring-shaped focusing structures, the more decreased the satisfaction of wearability and thus the comfort in wearability of the spectacle lens is. However, the more the surface of the spectacle lens is occupied by ring-shaped focusing structures, the better the probable efficacy of the spectacle lens for the reduction of progression of myopia of a wearer is assumed to be. Instead of allowing clear vision for different gaze directions as WO 2023/156052 A2 does by providing peripheral clear zones between neighbouring ring-shaped focusing structures, WO 2020/180817 A1, spectacle lens 1400 of Figure 14, as described in WO 2020/180817 A1, page 32, lines 14 to 17, allows clear vision only via a first clear aperture 1410 for distance vision and a second clear aperture 1420 for near vision, apart from the clear outer region 1440 of the spectacle lens 1400, i.e., in the periphery of the spectacle lens 1400 not regularly used for direct vision. Based on the findings of WO 2023/156052 A2, spectacle lens 1400 of Figure 14 of WO 2020/180817 A1 is assumed to provide less comfort in wearability compared to lens 1 of Table 1 of WO 2023/156052 A2. In other words, even if the efficacy in reducing progression of myopia of the wearer of spectacle lens 1400 of Figure 14 of WO 2020/180817 A1 might be higher, the probability that children would wear such a spectacle lens 1400 is assumed to be lower due to an assumed lack of comfort in wearability.

In contrast to the spectacle lens 1400 described in WO 2020/180817 A1, the spectacle lens described in the forgoing balances probable efficacy in reduction of progression of myopia of the spectacle lens wearer with comfortable wearability for the spectacle lens wearer.

Preferably, the spectacle lens comprising the connected zone and the plurality of ring-shaped structures, the connected zone surrounding the optical centre of the spectacle lens or the fitting point of the spectacle lens, each ring-shaped structure of said plurality of ring-shaped structures having the surface power that is different to the surface power of the surface of the spectacle lens comprising the ring-shaped structure of the plurality of ring-shaped structures outside the respective domain of each ring-shaped structure of said plurality of ring-shaped structures, is characterized in that the diffuse zone induces a wide angle scatter or a narrow angle scatter, wide angle scatter as defined in ISO 4007:2018(E), entry 3.8.16, narrow angle scatter as defined in ISO 4007:2018(E), entry 3.8.15.

As described before, the spectacle lens balances probable efficacy in reduction of progression of myopia of the spectacle lens wearer with comfortable wearability for the spectacle lens wearer. In contrast to spectacle lens 1400 of Figure 14 of WO 2020/180817 A1, the spectacle lens described in the foregoing has no light scattering area 1430 additionally to a structure such as lenslets 1435 in spectacle lens 1400 of Figure 14 of WO 2020/180817 A1, but the diffuse zone itself provides either wide angle scatter or narrow angle scatter. This means that the spectacle lens described in the foregoing maintains structure-free clear zones between the ring-shaped structures, such structure-free clear zones have been found to contribute to the comfort in wearability for the spectacle lens wearer, as described in WO 2023/156052 A2, but uses ring-shaped domains of the ring-shaped structures, i.e., domains of the spectacle lens surface that are anyway not foreseen for allowing clear vision, to change the diffuse transmittance of the ring-shaped structure in form of wide angle scatter or narrow angle scatter. Based on clinical trials showing that an efficacy of spectacle lenses intended to prevent the progression of myopia of the spectacle lens wearer is decreasing overtime, i.e., showing better efficacy during the first year of wearing such spectacle lenses than during the second year of wearing, a strategy to prevent such an efficacy loss is to combine design features that act on different current theories in a same spectacle lens. It is further assumed that the probable efficacy and a stability of said probable efficacy over time of such spectacle lenses is enhanced when positioning design features that act on different current theories not only in the same spectacle lens but in close neighbourhood.

Preferably, the spectacle lens comprising the connected zone and the plurality of ring-shaped structures, the connected zone surrounding the optical centre of the spectacle lens or the fitting point of the spectacle lens, each ring-shaped structure of said plurality of ring-shaped structures having the surface power that is different to the surface power of the surface of the spectacle lens comprising the ring-shaped structure of the plurality of ring-shaped structures outside the respective domain of each ring-shaped structure of said plurality of ring-shaped structures, is characterized in that the diffuse zone has the wide angle scatter within one of the following ranges:

- a range from 0.1% to 25%,
- a range from 0.2% to 20%,
- a range from 0.3% to 15%,
- a range from 0.4% to 10%.

As described before, the spectacle lens balances probable efficacy in reduction of progression of myopia of the spectacle lens wearer with comfortable wearability for the spectacle lens wearer. Further, as described before, by introducing wide angle scatter in the diffuse zone, two different design features are combined in close neighbourhood in a same ring-shaped structure of said plurality of ring-shaped structures to increase the probable efficacy of the spectacle lens and prevent a loss in probable efficacy of the spectacle lens over time.

To maintain the comfort in wearability for the spectacle lens wearer that is assumed to be ensured by the structure-free zones between neighbouring ring-shaped structures, the wide angle scatter of the diffuse zone is selected from one of the previously mentioned ranges which are assumed not to disturb the comfort in wearability for the spectacle lens wearer.

Preferably, the spectacle lens comprising the connected zone and the plurality of ring-shaped structures, the connected zone surrounding the optical centre of the spectacle lens or the fitting point of the spectacle lens, each ring-shaped structure of said plurality of ring-shaped structures having the surface power that is different to the surface power of the surface of the spectacle lens comprising the ring-shaped structure of the plurality of ring-shaped structures outside the respective domain of each ring-shaped structure of said plurality of ring-shaped structures, is characterized in that the diffuse zone having the diffuse transmittance that is different to the diffuse transmittance of the ring-shaped structure of said plurality of ring-shaped structures comprises at least one of

- n ring-shaped diffuse subzones, $n \geq 1$, each ring-shaped diffuse zone of said n ring-shaped diffuse subzones having a diffuse transmittance that is different to the diffuse transmittance of said ring-shaped structure of said plurality of ring-shaped structures,
- m segment-shaped diffuse subzones, $m \geq 1$, each segment-shaped diffuse zone of said m segment-shaped diffuse subzones having a diffuse transmittance that is different to the diffuse transmittance of said ring-shaped structure of said plurality of ring-shaped structures.

The diffuse transmittance of the n ring-shaped diffuse subzones is as defined in CIE S 017:2020, entry 17-24-069. The diffuse transmittance of the m segment-shaped diffuse subzones is as defined in CIE S 017:2020, entry 17-24-069. The diffuse transmittance of the ring-shaped structure is as defined in CIE S 017:2020, entry 17-24-069.

A same ring-shaped structure of the plurality of ring-shaped structures may comprise

- one ring-shaped diffuse subzone, n = 1,
- n ring-shaped diffuse subzones, n > 1,
- one segment-shaped diffuse subzone, m = 1,
- m segment-shaped diffuse subzones, m > 1,
- one ring-shaped diffuse subzone, n = 1, and one segment-shaped diffuse subzone, m = 1,
- one ring-shaped diffuse subzone, n = 1, and m segment-shaped diffuse subzones, m > 1,
- n ring-shaped diffuse subzones, n > 1, and one segment-shaped diffuse subzone, m = 1,
- n ring-shaped diffuse subzones, n > 1, and m segment-shaped diffuse subzones, m > 1.

At least two mutually different ring-shaped structures of the plurality of ring-shaped structures may comprise at least one of n ring-shaped diffuse subzones, $n \geq 1$, and m segment-shaped diffuse subzones, $m \geq 1$, in a same spatial sequence in at least one of the circumferential direction and the direction perpendicular to the circumferential direction. For example, the at least two mutually different ring-shaped structures may comprise n ring-shaped diffuse subzones, $n \geq 1$, and, perpendicular to the circumferential direction, a distance between closest neighbouring onset lines is same in the at least two mutually different ring-shaped structures. Or, for example, the at least two mutually different ring-shaped structure may comprise m segment-shaped diffuse subzones, $m \geq 1$, and, in circumferential direction, a distance between closest onsets is same in the at least two mutually different ring-shaped structures. Or, for example, the at least two mutually different ring-shaped structures may comprise n ring-shaped diffuse subzones, n ≥ 1, and m segment-shaped diffuse subzones, m ≥ 1, and, relative to the m segment-shaped diffuse subzones, m ≥ 1, the n ring-shaped diffuse subzones, n ≥ 1, are arranged in a same manner in direction of a) the periphery of the spectacle lens and/or in direction of b1) the optical centre or b2) the fitting point of the spectacle lens within each ring-shaped structure of the at least two mutually different ring-shaped structures.

A "ring-shaped diffuse subzone" of the n ring-shaped diffuse subzones, n ≥ 1, is a ring-shaped domain of a same ring-shaped structure of the plurality of ring-shaped structures, said ring-shaped domain having the diffuse transmittance that is, at each x,y position inside said ring-shaped domain of said ring-shaped diffuse subzone, different to the diffuse transmittance of said same ring-shaped structure comprising the ring-shaped diffuse subzone. In other words, the ring-shaped diffuse subzone is the ring-shaped domain inside the domain of the same ring-shaped structure, the ring-shaped domain of the ring-shaped diffuse subzone having the diffuse transmittance that is different to the diffuse transmittance of said same ring-shaped structure at each x,y position inside the ring-shaped domain of the ring-shaped diffuse subzone. Each x,y position of the ring-shaped domain of the ring-shaped diffuse subzone is comprised in the domain of the same ring-shaped structure of the plurality of ring-shaped structures. Said ring-shaped domain of said ring-shaped diffuse subzone follows a ring-shaped path within said same ring-shaped structure starting from a point within said same ring-shaped structure and ending in said point within said same ring-shaped structure again. The ring-shaped path within the same ring-shaped structure is any path forming a closed ring within said same ring-shaped structure and within said ring-shaped domain of said ring-shaped diffuse subzone.

The ring-shaped diffuse subzone is limited by two onset lines, a first onset line and a second onset line, the first onset line passing each first onset and the second onset line passing each second onset, a first onset and a second onset being opposite to each other in a direction perpendicular to the circumferential direction. The first onset and the second onset are representing, along any direction from a centroid of the ring-shaped diffuse subzone towards the periphery of the spectacle lens, a first and a last position in which the diffuse transmittance of the ring-shaped domain of the ring-shaped diffuse subzone differs from the diffuse transmittance of the domain of a same ring-shaped structure of the plurality of ring-shaped structures. Each x,y position of the ring-shaped domain of the ring-shaped diffuse subzone is comprised in the domain of the same ring-shaped structure. Preferably, a distance between the two onset lines of the ring-shaped diffuse subzone is smaller than the width of the ring-shaped structure comprising the ring-shaped diffuse subzone.

In case of n > 1, the ring-shaped domains of the ring-shaped diffuse subzones are positioned distanced to each other inside a same ring-shaped structure and in a direction perpendicular to the circumferential direction of said same ring-shaped structure.

In case of n > 1, each ring-shaped diffuse subzone is limited by two onset lines, a first onset line and a second onset line, the first onset line passing each first onset and the second onset line passing each second onset of a respective ring-shaped diffuse subzone, a first onset and a second onset being opposite to each other in a direction perpendicular to the circumferential direction. The first onset and the second onset are representing, along any direction from a centroid of the respective ring-shaped diffuse subzone towards the periphery of the spectacle lens, a first and a last position in which the diffuse transmittance of the ring-shaped domain of the respective ring-shaped diffuse subzone differs from the diffuse transmittance of the domain of a same ring-shaped structure of the plurality of ring-shaped structures. Each x,y position of the ring-shaped domain of the respective ring-shaped diffuse subzone is comprised in the domain of the same ring-shaped structure. Preferably, a distance between the two onset lines of each ring-shaped diffuse subzone is smaller than the width of the respective ring-shaped structure comprising the ring-shaped diffuse subzone.

A "segment-shaped diffuse subzone" of the m segment-shaped diffuse subzones, m ≥ 1, is a segment-shaped domain of a same ring-shaped structure of said plurality of ring-shaped structures, the segment-shaped domain of said segment-shaped diffuse subzone having the diffuse transmittance that is, at each x,y position inside said segment-shaped domain of said segment-shaped diffuse subzone, different to the diffuse transmittance of said same ring-shaped structure comprising the segment-shaped diffuse subzone. In other words, the segment-shaped diffuse subzone is the segment-shaped domain inside the domain of the same ring-shaped structure, the segment-shaped domain of the segment-shaped subzone having the diffuse transmittance that is different to the diffuse transmittance of said ring-shaped structure at each x,y position inside the segment-shaped domain of the segment-shaped diffuse subzone. Each x,y position of the segment-shaped domain of the segment-shaped subzone is comprised in the domain of the same ring-shaped structure of the plurality of ring-shaped structures. The segment-shaped domain of the segment-shaped diffuse subzone of a same ring-shaped structure does not form a closed ring within said same ring-shaped structure.

The segment-shaped diffuse subzone is limited by an onset line passing each onset of the segment-shaped diffuse subzone, an onset of the segment-shaped diffuse subzone representing, along any direction from a centroid of the segment-shaped diffuse subzone towards a periphery of the segment-shaped diffuse subzone, a last position in which the diffuse transmittance of the segment-shaped domain of the segment-shaped diffuse subzone differs from the diffuse transmittance of a same ring-shaped structure of the plurality of ring-shaped structure. Each x,y position of the segment-shaped domain of the segment-shaped diffuse subzone is comprised in the domain of said same ring-shaped structure.

In case of m > 1, the segment-shaped domains the segment-shaped diffuse subzones are positioned distanced to each other inside a same ring-shaped structure of the plurality of ring-shaped structures along the circumferential direction of said same ring-shaped structure and/or in a direction perpendicular to the circumferential direction of said same ring-shaped structure.

In case of m > 1, each segment-shaped diffuse subzone is limited by an onset line passing each onset of a respective segment-shaped diffuse subzone, an onset of the respective segment-shaped diffuse subzone representing, along any direction from a centroid of the respective segment-shaped diffuse subzone towards a periphery of the respective segment-shaped diffuse subzone, a last position in which the diffuse transmittance of the segment-shaped domain of the respective segment-shaped diffuse subzone differs from the diffuse transmittance of a same ring-shaped structure of the plurality of ring-shaped structure. Each x,y position of the segment-shaped domain of the respective segment-shaped diffuse subzone is comprised in the domain of said same ring-shaped structure.

Preferably, a spatial extent of the segment-shaped diffuse subzone in the circumferential direction of a same ring-shaped structure of the plurality of ring-shaped structures exceeds a spatial extent of the segment-shaped diffuse subzone perpendicular to the circumferential direction. Preferably the spatial extent of the segment-shaped diffuse subzone in the circumferential direction of the same ring-shaped structure exceeds the spatial extent of the segment-shaped diffuse subzone perpendicular to the circumferential direction by at least a factor 2. Preferably, the maximum spatial extent of the segment-shaped diffuse subzone of the same ring-shaped structure perpendicular to the circumferential direction is the width of said same ring-shaped structure.

As described before, the spectacle lens balances probable efficacy in reduction of progression of myopia of the spectacle lens wearer with comfortable wearability for the spectacle lens wearer. Further, as described before, by introducing the diffuse zone, two different design features are combined in close neighbourhood in a same ring-shaped structure of said plurality of ring-shaped structures to increase the probable efficacy of the spectacle lens and to prevent a loss in probable efficacy of the spectacle lens overtime. By specifying the diffuse zone as n ring-shaped diffuse subzones and/or m segment-shaped diffuse subzones where respective diffuse subzones are distanced to each other within a same ring-shaped structure of said plurality of ring-shaped structures, said two different design features are combined in even closer neighbourhood and thus assumed to further increase the probable efficacy of the spectacle lens and to better prevent a loss in probable efficacy of the spectacle lens over time.

Preferably, the spectacle lens comprising the connected zone and the plurality of ring-shaped structures, the connected zone surrounding the optical centre of the spectacle lens or the fitting point of the spectacle lens, each ring-shaped structure of said plurality of ring-shaped structures having the surface power that is different to the surface power of the surface of the spectacle lens comprising the ring-shaped structure of the plurality of ring-shaped structures outside the respective domain of each ring-shaped structure of said plurality of ring-shaped structures, the diffuse zone having the diffuse transmittance that is different to the diffuse transmittance of the ring-shaped structure of said plurality of ring-shaped structures comprises at least one of

- n ring-shaped diffuse subzones, n ≥ 1, each ring-shaped diffuse zone of said n ring-shaped diffuse subzones having a diffuse transmittance that is different to the diffuse transmittance of said ring-shaped structure of said plurality of ring-shaped structures, preferably each ring-shaped diffuse subzone of said n ring-shaped diffuse subzones has a wide angle scatter or a narrow angle scatter, wide angle scatter as defined in ISO 4007:2018(E), entry 3.8.16, narrow angle scatter as defined in as defined in ISO 4007:2018(E), entry 3.8.15,

- m segment-shaped diffuse subzones, m ≥ 1, each segment-shaped diffuse zone of said m segment-shaped diffuse subzones having a diffuse transmittance that is different to the diffuse transmittance of said ring-shaped structure of said plurality of ring-shaped structures, each segment-shaped diffuse subzone of said m segment-shaped diffuse subzones has a wide angle scatter or a narrow angle scatter, wide angle scatter as defined in ISO 4007:2018(E), entry 3.8.16, narrow angle scatter as defined in as defined in ISO 4007:2018(E), entry 3.8.15.

As described before, the spectacle lens balances probable efficacy in reduction of progression of myopia of the spectacle lens wearer with comfortable wearability for the spectacle lens wearer. Further, as described before, by specifying the diffuse zone as n ring-shaped diffuse subzones and/or m segment-shaped diffuse subzones where respective diffuse subzones are distanced to each other within a same ring-shaped structure of said plurality of ring-shaped structures, said two different design features are combined in even closer neighbourhood and thus assumed to further increase the probable efficacy of the spectacle lens and to better prevent a loss in probable efficacy of the spectacle lens over time.

Preferably, the wide angle scatter of at least one of i) each ring-shaped diffuse subzone of said n ring-shaped diffuse subzones and ii) each segment-shaped diffuse zone of said m segment-shaped diffuse subzones is selected from at least one of the following ranges:

- a range from 0.1% to 25%,
- a range from 0.2% to 20%,
- a range from 0.3% to 15%,
- a range from 0.4% to 10%.

As described before, the spectacle lens balances probable efficacy in reduction of progression of myopia of the spectacle lens wearer with comfortable wearability for the spectacle lens wearer. Further, as described before, to maintain the comfort in wearability for the spectacle lens wearer that is assumed to be ensured by the structure-free zones between neighbouring ring-shaped structures, the wide angle scatter of the n ring-shaped diffuse subzones and/or m segment-shaped diffuse subzones is selected from one of the previously mentioned ranges which are assumed not to disturb the comfort in wearability for the spectacle lens wearer.

The spectacle lens comprising the connected zone and the plurality of ring-shaped structures, the connected zone comprising the optical centre of the spectacle lens or the fitting point of the spectacle lens, each ring-shaped structure of the plurality of ring-shaped structures having the surface power that is different to the surface power of the surface of the spectacle lens comprising the ring-shaped structure of the plurality of ring-shaped structures outside the domain of the ring-shaped structure of the plurality of ring-shaped structures, is characterized in that

> i) a ratio of a sum of areas of ring-shaped domains of the n ring-shaped diffuse subzones, $n \geq 1$, of the ring-shaped structure divided by an area of a domain of said ring-shaped structure, or
> ii) a ratio of a sum of areas of segment-shaped domains of the m segment-shaped diffuse subzones, $m \geq 1$, of the ring-shaped structure divided by an area of a domain of said ring-shaped structure, or
> iii) a ratio of a total sum of areas of domains divided by an area of a domain of the ring-shaped structure, said total sum of areas of domains summing up a sum of areas of ring-shaped domains of said n ring-shaped diffuse subzones, $n \geq 1$, of said same ring-shaped structure and a sum of areas of segment-shaped domains of said m segment-shaped diffuse subzones, $m \geq 1$, of said ring-shaped structure,

each is selected from one range of the following ranges:

- a range of from 20% to 70%,
- a range of from 25% to 65%,
- a range of from 30% to 60%,
- a range of from 32% to 55%,
- a range of from 35% to 53%.

An "area of the ring-shaped domain" of a respective ring-shaped diffuse subzone of the n ring-shaped diffuse subzones, $n \geq 1$, is i) a surface area of said ring-shaped domain of the respective ring-shaped diffuse subzone on the surface of the spectacle lens comprising a respective ring-shaped structure of the plurality of ring-shaped structures or ii) a surface area of a projection of said ring-shaped domain of the respective ring-shaped diffuse subzone in an x,y plane.

An "area of the domain of the ring-shaped structure" of the plurality of ring-shaped structures is i) a surface area of the domain of said ring-shaped structure on the surface of the spectacle lens comprising said ring-shaped structure or ii) a surface area of a projection of said domain of the ring-shaped structure in an x,y plane.

An "area of the segment-shaped domain" of a respective segment-shaped diffuse subzone of the m segment-shaped subzones, $m \geq 1$, is i) a surface area of said segment-shaped domain of the respective segment-shaped diffuse subzone on the surface of the spectacle lens comprising a respective ring-shaped structure of the plurality of ring-shaped structures or ii) a surface area of a projection of said segment-shaped domain of the respective segment-shaped diffuse subzone in an x,y plane.

As described before, the spectacle lens balances probable efficacy in reduction of progression of myopia of the spectacle lens wearer with comfortable wearability for the spectacle lens wearer. The spectacle lens described in the foregoing maintains structure-free clear zones between the ring-shaped structures, as mentioned before, such structure-free clear zones have been found to contribute to the comfort in wearability for the spectacle lens wearer, as described in WO 2023/156052 A2. By selecting the before-mentioned ratios from one of the before-mentioned ranges, subjects of a study evaluated the spectacle lens with respect to comfort in wearability, i.e. satisfaction of wearability in Table 1 of WO 2023/156052 A2, as being at least comparable as lens 1 and lens 2 of Table 1 of WO 2023/156052 A2. This means the combination of the two design features within a same ring-shaped structure of the plurality of ring-shaped structure while considering above-mentioned ranges preserves the comfort of wearability of the spectacle lens for a spectacle lens wearer.

Preferably, the spectacle lens comprising the connected zone and the plurality of ring-shaped structures, the connected zone surrounding the optical centre of the spectacle lens or the fitting point of the spectacle lens, each ring-shaped structure of the plurality of ring-shaped structures having the surface power that is different to the surface power of the surface of the spectacle lens comprising the ring-shaped structure of the plurality of ring-shaped structures outside a respective domain of each ring-shaped structure of the plurality of ring-shaped structures, is characterized in that said ring-shaped structure of said plurality of ring-shaped structures has a surface mean power that is not constant along a ring-shaped path of said ring-shaped structure.

A "surface mean power" of the ring-shaped structure is defined analogously as in ISO 13666:2019(E), entry 3.13.12, as focal power (3.10.2) of the surface of a ring-shaped structure of the plurality of ring-shaped structures halfway between two surface-power values in two principal meridians. Said two surface power values in said two principal meridians are defined as in ISO 13666:2019(E), entry 3.10.4. The two principal meridians in any position of the/each surface are defined analogously as in ISO 13666:2019(E), entry 3.4.5, as meridians with maximum and minimum curvatures in a same position.

A "ring-shaped path within the ring-shaped structure" is a path within a same ring-shaped structure of the plurality of ring-shaped structures which surrounds the structure-free domain of said same ring-shaped structure from a point within said same ring-shaped structure and ends in said point again. Preferably, the ring-shaped path is along the circumferential direction of said ring-shaped structure.

As described before, the spectacle lens balances probable efficacy in reduction of progression of myopia of the spectacle lens wearer with comfortable wearability for the spectacle lens wearer. While maintaining the comfort of wearability of the spectacle lens for a spectacle lens wearer, the non-constant surface mean power of a same ring-shaped structure of the plurality of ring-shaped structures is assumed to assist in increasing the probable efficacy of the spectacle lens in prevention or reduction of myopia progression of the spectacle lens wearer and in better preventing a loss in probable efficacy of the spectacle lens over time.

Preferably, the spectacle lens comprising the connected zone and the plurality of ring-shaped structures, the connected zone surrounding the optical centre of the spectacle lens or the fitting point of the spectacle lens, each ring-shaped structure of the plurality of ring-shaped structures having the surface power that is different to the surface power of the surface of the spectacle lens comprising the ring-shaped structure of the plurality of ring-shaped structures outside a respective domain of each ring-shaped structure of the plurality of ring-shaped structures, is characterized in that at least one of

- a start of a segment-shaped diffuse subzone m of the m segment-shaped diffuse subzones, $m \geq 1$, of the ring-shaped structure is displaced along a circumferential direction relative to a start of a segment-shaped diffuse subzone m', m", m'", ... of segment-shaped diffuse subzones, $m' \geq 1, m'' \geq 1, m''' \geq 1, ...$ of at least one mutually different ring-shaped structure of the plurality of ring-shaped structures and

- an end of a segment-shaped diffuse subzone m of the m segment-shaped diffuse subzones, $m \geq 1$, of the ring-shaped structure is displaced along a circumferential direction relative to an end of a segment-shaped diffuse subzone m', m", m'", ... of segment-shaped diffuse subzones, $m' \geq 1, m'' \geq 1, m''' \geq 1, ...$ of at least one mutually different ring-shaped structure of the plurality of ring-shaped structures.

A "start of a segment-shaped diffuse subzone m of said m segment-shaped diffuse subzones, $m \geq 1$," of the ring-shaped structure of the plurality of ring-shaped structures is a first position in the circumferential direction of said ring-shaped structure in which the diffuse transmittance of a respective segment-shaped diffuse subzone of the m segment-shaped diffuse subzones, $m \geq 1$, deviates from the diffuse transmittance of said ring-shaped structure outside any domain of any diffuse subzone of said ring-shaped structure.

An "end of the segment-shaped diffuse subzone m of the m segment-shaped diffuse subzones, $m \geq 1$," of the ring-shaped structure of the plurality of ring-shaped structures, is a last position in the circumferential direction of said ring-shaped structure in which the diffuse transmittance of a respective segment-shaped diffuse subzone of the m segment-shaped diffuse subzones, $m \geq 1$, deviates from the diffuse transmittance of said ring-shaped structure outside any domain of any diffuse subzone of said ring-shaped structure.

The "start of a segment-shaped diffuse subzone m of the m segment-shaped diffuse subzones, $m \geq 1$, of the ring-shaped structure is displaced" along the circumferential direction relative to a start of a segment-shaped diffuse subzone m', m", m'", ... of segment-shaped diffuse subzones, $m' \geq 1, m'' \geq 1, m''' \geq 1, ...$ of at least one mutually different ring-shaped structure of the plurality of ring-shaped structures when i) there is no line from the optical centre of the spectacle lens through both the start of a segment-shaped diffuse subzone m of said segment-shaped diffuse subzones, $m \geq 1$, of said ring-shaped structure and the start of a segment-shaped diffuse subzone m', m", m'", ... $m' \geq 1, m'' \geq 1, m''' \geq 1, ...,$ of at least one mutually different ring-shaped structure of said plurality of ring-shaped structures or ii) there is no line from the fitting point of the spectacle lens through both the start of a segment-shaped diffuse subzone m of said segment-shaped diffuse subzones, $m \geq 1$, of said ring-shaped structure and the start of a segment-shaped diffuse subzone m', m", m'", ... $m' \geq 1, m'' \geq 1, m''' \geq 1, ...,$ of at least one mutually different ring-shaped structure of said plurality of ring-shaped structures.

The "end of a segment-shaped diffuse subzone m of the m segment-shaped diffuse subzones, $m \geq 1$, of the ring-shaped structure is displaced" along the circumferential direction relative to an end of a segment-shaped diffuse subzone m', m", m'", ... of segment-shaped diffuse subzones, $m' \geq 1, m'' \geq 1, m''' \geq 1, ...$ of at least one mutually different ring-shaped structure of the plurality of ring-shaped structures when i) there is no line from the optical centre of the spectacle lens through both the end of a segment-shaped diffuse subzone m of said segment-shaped diffuse subzones, $m \geq 1$, of said ring-shaped structure and the end of a segment-shaped diffuse subzone m', m", m"', ... m' ≥ 1, m" ≥ 1, m''' ≥ 1, ..., of at least one mutually different ring-shaped structure of said plurality of ring-shaped structures or ii) there is no line from the fitting point of the spectacle lens through both the end of a segment-shaped diffuse subzone m of said segment-shaped diffuse subzones, m ≥ 1, of said ring-shaped structure and the end of a segment-shaped diffuse subzone m', m", m"', ... m' ≥ 1, m" ≥ 1, m''' ≥ 1, ..., of at least one mutually different ring-shaped structure of said plurality of ring-shaped structures.

Preferably, in case a same ring-shaped structure of the plurality of ring-shaped structures comprises m segment-shaped diffuse subzones, m ≥ 1, only, i.e. in absence of n ring-shaped diffuse subzones, n ≥ 1, within said same ring-shaped structure, the maximum spatial extent of the m segment-shaped diffuse subzones, m ≥ 1, of said same ring-shaped structure in the direction perpendicular to the circumferential direction is the width of said same ring-shaped structure.

As described before, the spectacle lens balances probable efficacy in reduction of progression of myopia of the spectacle lens wearer with comfortable wearability for the spectacle lens wearer. The before described displacement is assumed to further increase the probable efficacy of the spectacle lens and to better prevent a loss in probable efficacy of the spectacle lens over time.

Preferably, the spectacle lens comprising the connected zone and the plurality of ring-shaped structures, the connected zone surrounding the optical centre of the spectacle lens or the fitting point of the spectacle lens, each ring-shaped structure of the plurality of ring-shaped structures having the surface power that is different to the surface power of the surface of the spectacle lens comprising the ring-shaped structure of the plurality of ring-shaped structures outside a respective domain of each ring-shaped structure of the plurality of ring-shaped structures, is characterized in that at least one of

- a number n of the n ring-shaped diffuse subzones, n ≥ 1, of the ring-shaped structure is equal or different to a number n', n", n"', ... of n', n", n'''... ring-shaped diffuse subzones, n' ≥ 1, n" ≥ 1, n''' ≥ 1, ... of at least one mutually different ring-shaped structure of the plurality of ring-shaped structure, and
- a number m of the m segment-shaped diffuse subzones, m ≥ 1, of the ring-shaped structure is equal or different to a number m', m", m''' of m', m", m"', ... segment-shaped diffuse subzones, m' ≥ 1, m" ≥ 1, m''' ≥ 1, ... of at least one mutually different ring-shaped structure of the plurality of ring-shaped structures.

In case the number n of the n ring-shaped diffuse subzones, n ≥ 1, of the ring-shaped structure is equal to a number n', n", n"', ... of n', n", n'''... ring-shaped diffuse subzones, n' ≥ 1, n" ≥ 1, n''' ≥ 1, ... of at least one mutually different ring-shaped structure of the plurality of ring-shaped structure, preferably at least one of the following applies:

- a width of the ring-shaped diffuse subzone n of the n ring-shaped diffuse subzones n, n ≥ 1, is a) equal to a width of each of the ring-shaped diffuse subzone n', n", n"', ... of the n', n", n"', ... ring-shaped diffuse subzones, n' ≥ 1, n" ≥ 1, n''' ≥ 1, ... of at least one mutually different ring-shaped structure of the plurality of ring-shaped structures or is b) different to a width of at least one ring-shaped diffuse subzone n', n", n"', ... of the n', n", n"', ... ring-shaped diffuse subzones, n' ≥ 1, n" ≥ 1, n''' ≥ 1, ... of at least one mutually different ring-shaped structure of the plurality of ring-shaped structures. The width of a respective ring-shaped diffuse subzone n, n', n", n''', ..., n ≥ 1, n' ≥ 1, n" ≥ 1, n''' ≥ 1, ... is a distance between the two onset lines of the respective ring-shaped diffuse subzone n, n', n", n''', ..., n ≥ 1, n' ≥ 1, n" ≥ 1, n''' ≥ 1, ... at two onsets that are opposite to each other in the direction perpendicular to the circumferential direction;
- a diffuse transmittance of the ring-shaped diffuse subzone n of the n ring-shaped diffuse subzones n, n ≥ 1, is a) equal to a diffuse transmittance of each of the ring-shaped diffuse subzone n', n", n"', ... of the n', n", n"', ... ring-shaped diffuse subzones, n' ≥ 1, n" ≥ 1, n''' ≥ 1, ... of at least one mutually different ring-shaped structure of the plurality of ring-shaped structures or is b) different to a diffuse transmittance of at least one ring-shaped diffuse subzone n', n", n"', ... of the n', n", n"', ... ring-shaped diffuse subzones, n' ≥ 1, n" ≥ 1, n''' ≥ 1, ... of at least one mutually different ring-shaped structure of the plurality of ring-shaped structures, diffuse transmittance as defined in CIE S 017:2020, entry 17-24-069.

In case the number n of the n ring-shaped diffuse subzones, n ≥ 1, of the ring-shaped structure is different to a number n', n", n"', ... of n', n", n'''... ring-shaped diffuse subzones, n' ≥ 1, n" ≥ 1, n''' ≥ 1, ... of at least one mutually different ring-shaped structure of the plurality of ring-shaped structure, preferably at least one of the following applies:

- the width of the ring-shaped diffuse subzone n of the n ring-shaped diffuse subzones n, n ≥ 1, is a) equal to the width of each of the ring-shaped diffuse subzone n', n", n"', ... of the n', n", n"', ... ring-shaped diffuse subzones, n' ≥ 1, n" ≥ 1, n''' ≥ 1, ... of at least one mutually different ring-shaped structure of the plurality of ring-shaped structures or is b) different to the width of at least one ring-shaped diffuse subzone n', n", n"', ... of the n', n", n"', ... ring-shaped diffuse subzones, n' ≥ 1, n" ≥ 1, n''' ≥ 1, ... of at least one mutually different ring-shaped structure of the plurality of ring-shaped structures;
- the diffuse transmittance of the ring-shaped diffuse subzone n of the n ring-shaped diffuse subzones n, n ≥ 1, is a) equal to the diffuse transmittance of each of the ring-shaped diffuse subzone n', n", n''', ... of the n', n", n''', ... ring-shaped diffuse subzones, n' ≥ 1, n" ≥ 1, n''' ≥ 1, ... of at least one mutually different ring-shaped structure of the plurality of ring-shaped structures or is b) different to the diffuse transmittance of at least one ring-shaped diffuse subzone n', n", n''', ... of the n', n", n''', ... ring-shaped diffuse subzones, n' ≥ 1, n" ≥ 1, n''' ≥ 1, ... of at least one mutually different ring-shaped structure of the plurality of ring-shaped structures, diffuse transmittance as defined in CIE S 017:2020, entry 17-24-069.

In case the number m of said m segment-shaped diffuse subzones, m ≥ 1, of the ring-shaped structure is equal to a number m', m", m''', ... of m', m", m''', ... segment-shaped diffuse subzones, m' ≥ 1, m" ≥ 1, m''' ≥ 1, ... of at least one mutually different ring-shaped structure of the plurality of ring-shaped structures, preferably the following applies:

- a length of the segment-shaped diffuse subzone m of the m segment-shaped diffuse subzones, m ≥ 1, of a same ring-shaped structure is different to a length of the segment-shaped diffuse subzone m', m", m''', ... of the m', m", m''', ... segment-shaped diffuse subzones, m' ≥ 1, m" ≥ 1, m''' ≥ 1, ... of at least one mutually different ring-shaped structure of the plurality of ring-shaped structures.

The length of the segment-shaped diffuse subzone m, m', m", m''', ... of the m, m', m", m''', ... segment-shaped diffuse subzones, m ≥ 1, m' ≥ 1, m" ≥ 1, m''' ≥ 1, ... is limited by the start and the end of the respective segment-shaped diffuse subzone m, m', m", m''', ... and the length of the respective segment-shaped diffuse subzone m, m', m", m''', ... is a length along the circumferential direction of the ring-shaped structure comprising said respective segment-shaped diffuse subzone m, m', m", m''',

Preferably, the length of the segment-shaped diffuse subzone m, m', m", m''', ... of the m, m', m", m''', ... segment-shaped diffuse subzones, m ≥ 1, m' ≥ 1, m" ≥ 1, m''' ≥ 1, ... is within one of the following ranges:

- a range from 0.2 mm to 4.5 mm,
- a range from 0.3 mm to 4 mm,
- a range from 0.4 mm to 3.5 mm,
- a range from 0.5 mm to 3 mm,
- a range from 0.6 mm to 2.5 mm.

In case the number m of said m segment-shaped diffuse subzones, m ≥ 1, of the ring-shaped structure is different to a number m', m", m''', ... of m', m", m''', ... segment-shaped diffuse subzones, m' ≥ 1, m" ≥ 1, m''' ≥ 1, ... of at least one mutually different ring-shaped structure of the plurality of ring-shaped structures, preferably the following applies:

- the length of each segment-shaped diffuse subzone m of the m segment-shaped diffuse subzones, m ≥ 1, is same for a same ring-shaped structure but different to the a length of the segment-shaped diffuse subzone m', m", m''', ... of the m', m", m''', ... segment-shaped diffuse subzones, m' ≥ 1, m" ≥ 1, m''' ≥ 1, ... of at least one mutually different ring-shaped structure of the plurality of ring-shaped structures.

Preferably, the spectacle lens comprising the connected zone and the plurality of ring-shaped structures, the connected zone surrounding the optical centre of the spectacle lens or the fitting point of the spectacle lens, each ring-shaped structure of the plurality of ring-shaped structures having the surface power that is different to the surface power of the surface of the spectacle lens comprising the ring-shaped structure of the plurality of ring-shaped structures outside a respective domain of each ring-shaped structure of the plurality of ring-shaped structures, is characterized in that at least one of

- a width of k different ring-shaped diffuse subzones of the n ring-shaped diffuse subzones, n > 1, is equal in a direction perpendicular to the circumferential direction of the ring-shaped structure, and
- a number l of l different segment-shaped diffuse subzones of the m segment-shaped diffuse subzones, m > 1, is repeated along the circumferential direction of the ring-shaped structure.

A width of k different ring-shaped diffuse subzones of the n ring-shaped diffuse subzones, n > 1, being equal in the direction perpendicular to the circumferential direction of a same ring-shaped structure of the plurality of ring-shaped structures, preferably includes at least one of:

- a width of a ring-shaped diffuse subzone i, i = 1 to n, is equal, in the direction perpendicular to the circumferential direction, in at least a ring-shaped diffuse subzone j, j ≠ i, the ring-shaped diffuse subzone i being distanced to the ring-shaped diffuse subzone j in the direction perpendicular to the circumferential direction and within said same ring-shaped structure of said plurality of ring-shaped structures. The width of the ring-shaped diffuse subzone i, i = 1 to n, is the distance between the two onset lines of the ring-shaped diffuse subzone i, i = 1 to n, at two onsets that are opposite to each other in the direction perpendicular to the circumferential direction. The ring-shaped diffuse subzone i, i = 1 to n, is distanced to the ring-shaped diffuse subzone j ≠ i, within the same ring-shaped structure of the plurality of ring-shaped structures when the onset line of the ring-shaped diffuse subzone j does not coincide with the closest onset line of the ring-shaped diffuse subzone i;
- a width of a ring-shaped diffuse subzone i, i = 1 to n, a of ring-shaped structure is equal in at least one ring-shaped diffuse subzone i', i", i'", ..., i = i" = i''' = 1 to n; or i' = 1 to n', i" = 1 to n", i''' = 1 to n''', of at least one mutually different ring-shaped structure of the plurality of ring-shaped structures.

A number of l different segment-shaped diffuse subzones of the m segment-shaped diffuse subzones, m > 1, is "repeated" along the circumferential direction of a same ring-shaped structure of the plurality of ring-shaped structures when each of said l different segment-shaped diffuse subzones of the m segment-shaped diffuse subzones is of same length along the circumferential direction and same spatial extent in the direction perpendicular to the circumferential direction and only differs in a respective start within a same ring-shaped structure of the plurality of ring-shaped structures. Preferably, the maximum spatial extent of each of the l different segment-shaped diffuse subzones of the m segment-shaped diffuse subzones of the same ring-shaped structure perpendicular to the circumferential direction is the width of said same ring-shaped structure. Preferably, m = l, i.e. all of the m segment-shaped diffuse subzones are repeated along the circumferential direction of a same ring-shaped structure of the plurality of ring-shaped structures. Preferably, the l segment-shaped diffuse subzones of the m segment-shaped diffuse subzones, m > 1, are positioned equidistantly along the circumferential direction within a same ring-shaped structure of the plurality of ring-shaped structures. In other words, the distance between the starts of closest neighbouring segment-shaped diffuse subzones of said l different segment-shaped diffuse subzones of the m segment-shaped diffuse subzones that are repeated along the circumferential direction of a same ring-shaped structure of the plurality of ring-shaped structures is equal for each of said l different segment-shaped diffuse subzones of the m segment-shaped diffuse subzones that are repeated along the circumferential direction of a same ring-shaped structure of the plurality of ring-shaped structures.

The number of l different segment-shaped diffuse subzones of the m segment-shaped diffuse subzones, m > 1, being repeated along the circumferential direction of a same ring-shaped structure of the plurality of ring-shaped structures, preferably includes at least one of:

- a length of a segment-shaped diffuse subzone i, i = 1 to m, is repeated in at least a segment-shaped diffuse subzone j, j ≠ i, along the circumferential direction of a same ring-shaped structure of the plurality of ring-shaped structures, the segment-shaped diffuse subzone i, i = 1 to m, being distanced along the circumferential direction of said same ring-shaped structure to the segment-shaped diffuse subzone j, j ≠ i. The segment-shaped diffuse subzone i, i = 1 to m, is distanced to the segment-shaped diffuse subzone j, j ≠ i, of the same ring-shaped structure when an onset of segment-shaped diffuse subzone j does not coincide with a closest neighbouring onset of the segment-shaped diffuse subzone i;

- a length of a segment-shaped diffuse subzone i, i = 1 to m, of a same ring-shaped structure of the plurality of ring-shaped structures is repeated in at least a segment-shaped diffuse subzone i', i", i'", ..., i' = i" = i''' = 1 to m; or i' = 1 to m', i" = 1 to m", i''' = 1 to m''', ..., where m, m', m", m''', ... are mutually different from each other, of at least one mutually different ring-shaped structure of said plurality of ring-shaped structures;

- a length of a segment-shaped diffuse subzone i, i = 1 to m, of a same ring-shaped structure of the plurality of ring-shaped structures is repeated in at least a segment-shaped diffuse subzone i', i", i'", ..., i' = 1 to m', i" = 1 to m", i''' = 1 to m''', ... of at least one mutually different ring-shaped structure of said plurality of ring-shaped structures, wherein a length of said segment-shaped diffuse subzone i, i = 1 to m, being repeated means that the segment-shaped diffuse subzones i', i", i'", ..., i' = 1 to m', i" = 1 to m", i''' = 1 to m''', are of substantially the same length. Substantially the same length thereby includes a deviation of the length of segment-shaped diffuse subzones, preferably in mutually different ring-shaped structures, of at maximum 5%, preferably at maximum 4%.

As described before, the spectacle lens balances probable efficacy in reduction of progression of myopia of the spectacle lens wearer with comfortable wearability for the spectacle lens wearer. Apart from the comfort in wearability, the subjects of the study evaluated the spectacle lenses as aesthetically attractive.

The data set comprising at least one kind of the following kinds of data:

(i) data of the spectacle lens described before, the data of the spectacle lens being configured for the purpose of a use for a manufacture of the spectacle lens described before,

(ii) data containing computer-readable instructions for controlling one or more manufacturing machines in order to produce the spectacle lens described before.

Alternatively or additionally, the data set may comprise data of the spectacle lens described before, the data being configured to be fed to one manufacturing machine or more manufacturing machines for manufacturing the spectacle lens described before.

The data set may be stored on a computer-readable storage medium or carried by a data signal. The computer-readable storage medium may carry the data set. The computer-readable storage medium may be a non-transitory computer-readable storage medium. The data signal may carry the data set.

The method being configured for calculating, by a computer, data of a spectacle lens for the purpose of a use of the data for a manufacture of the spectacle lens, the spectacle lens comprising a plurality of ring-shaped structures,
the method is characterized in

- determining a domain or a plurality of domains of a diffuse zone within the domain of a same ring-shaped structure of said plurality of ring-shaped structures, the domain or the plurality of domains of the diffuse zone having a diffuse transmittance that is different to a diffuse transmittance of said domain of said same ring-shaped structure of said plurality of ring-shaped structures outside the domain or the plurality of domains of the diffuse zone, diffuse transmittance as defined in CIE S 017:2020, entry 17-24-069.

Preferably, the method configured for calculating, by a computer, data of the spectacle lens for the purpose of the use of the data for the manufacture of the spectacle lens, the spectacle lens comprising the plurality of ring-shaped structures, is characterized in that the domain or the plurality of domains of the diffuse zone within the domain of the same ring-shaped structure of the plurality of ring-shaped structures, outside the domain or the plurality of domains of the diffuse zone, induces the wide angle scatter, the wide angle scatter as defined in ISO 4007:2018(E), entry 3.8.16, or the narrow angle scatter, the narrow angle scatter as defined in ISO 4007:2018(E), entry 3.8.15. Preferably the wide angle scatter is within one of the following ranges:

- a range from 0.1% to 25%,
- a range from 0.2% to 20%,
- a range from 0.3% to 15%,
- a range from 0.4% to 10%.

Preferably, the method configured for calculating, by a computer, data of the spectacle lens for the purpose of the use of the data for the manufacture of the spectacle lens, the spectacle lens comprising the plurality of ring-shaped structures, is characterized in

- positioning each domain of each ring-shaped structure of the plurality of ring-shaped structures on the surface of the spectacle lens to surround or encircle the optical centre or the fitting point of the spectacle lens.

Preferably, the method configured for calculating, by a computer, data of the spectacle lens for the purpose of the use of the data for the manufacture of the spectacle lens, the spectacle lens comprising the plurality of ring-shaped structures, is characterized in

- positioning the connected zone on the surface of the spectacle lens to surround or encircle the optical centre or the fitting point of the spectacle lens.

Preferably, the method configured for calculating, by a computer, data of the spectacle lens for the purpose of the use of the data for the manufacture of the spectacle lens, the spectacle lens comprising the plurality of ring-shaped structures, is characterized in

- determining the domain or the plurality of domains of the diffuse zone within the domain of the same ring-shaped structure of the plurality of ring-shaped structures to be at least one of

   ∘ ring-shaped domains of n ring-shaped diffuse subzones, n ≥ 1, each ring-shaped domain of said n ring-shaped diffuse subzones having a diffuse transmittance that is different to the diffuse transmittance of the domain of said same ring-shaped structure of said plurality of ring-shaped structures, diffuse transmittance as defined in CIE S 017:2020, entry 17-24-069,
   ∘ segment-shaped domains of m segment-shaped subzones, m ≥ 1, each segment-shaped domain of said segment-shaped diffuse subzones having a diffuse transmittance that is different to the diffuse transmittance of the domain of said same ring-shaped structure of said plurality of ring-shaped structures, diffuse transmittance as defined in CIE S 017:2020, entry 17-24-069.

Preferably, the method configured for calculating, by a computer, data of the spectacle lens for the purpose of the use of the data for the manufacture of the spectacle lens, the spectacle lens comprising the plurality of ring-shaped structures, is characterized in determining

- a ratio of a sum of areas of ring-shaped domains of the n ring-shaped diffuse subzones, n ≥ 1, of a same ring-shaped structure of said plurality of ring-shaped structures divided by an area of the domain of said same ring-shaped structure, or
- a ratio of a sum of areas of segment-shaped domains of the m segment-shaped diffuse subzones, m ≥ 1, of a same ring-shaped structure of said plurality of ring-shaped structures divided by an area of the domain of said same ring-shaped structure, or
- a ratio of a total sum of areas of domains divided by an area of the domain of a same ring-shaped structure of the plurality of ring-shaped structures, said total sum of areas of domains summing up a sum of areas of ring-shaped domains of said n ring-shaped diffuse subzones, n ≥ 1, of said same ring-shaped structure and a sum of areas of segment-shaped domains of said m segment-shaped diffuse subzones, m ≥ 1, of said same ring-shaped structure,

to be in one range of the following ranges:

- a range of from 20% to 70%,
- a range of from 25% to 65%,
- a range of from 30% to 60%,
- a range of from 32% to 55%,
- a range of from 35% to 53%.

Preferably, the method configured for calculating, by a computer, data of the spectacle lens for the purpose of the use of the data for the manufacture of the spectacle lens, the spectacle lens comprising the plurality of ring-shaped structures, is characterized in

- determining a surface mean power of a same ring-shaped structure of the plurality of ring-shaped structures to be not constant along a ring-shaped path of said same ring-shaped structure.

Preferably, the method configured for calculating, by a computer, data of the spectacle lens for the purpose of the use of the data for the manufacture of the spectacle lens, the spectacle lens comprising the plurality of ring-shaped structures, is characterized in at least one of

- determining a start of a segment-shaped diffuse subzone m of said m segment-shaped diffuse subzones, $m \geq 1$, of a same ring-shaped structure of the plurality of ring-shaped structures to be displaced along the circumferential direction relative to a start of a domain of a segment-shaped diffuse subzone m', m'', m''', ... of m', m'', m''', ... segment-shaped diffuse subzones, $m' \geq 1$, $m'' \geq 1$, $m''' \geq 1$, ... of at least one mutually different ring-shaped structure of said plurality of ring-shaped structures and
- determining an end of a segment-shaped diffuse subzone m of said m segment-shaped diffuse subzones, $m \geq 1$, of a same ring-shaped structure of the plurality of ring-shaped structures to be displaced along the circumferential direction relative to an end of a domain of a segment-shaped diffuse subzone m', m'', m''', ... of m', m'', m''', ... segment-shaped diffuse subzones, $m' \geq 1$, $m'' \geq 1$, $m''' \geq 1$, ... of at least one mutually different ring-shaped structure of said plurality of ring-shaped structures.

Preferably, the method configured for calculating, by a computer, data of the spectacle lens for the purpose of the use of the data for the manufacture of the spectacle lens, the spectacle lens comprising the plurality of ring-shaped structures, is characterized in at least one of

- determining a number n of said n ring-shaped diffuse subzones, $n \geq 1$, of a same ring-shaped structure of the plurality of ring-shaped structures to be equal or different to a number n', n'', n'''... of n', n'', n''', ... ring-shaped diffuse subzones, $n' \geq 1$, $n'' \geq 1$, $n''' \geq 1$, of at least one mutually different ring-shaped structure of said plurality of ring-shaped structure, and
- determining a number m of said m segment-shaped diffuse subzones, $m \geq 1$, of a same ring-shaped structure of the plurality of ring-shaped structures to be equal or different to a number m', m'', m''', ... of said m', m'', m''', ... segment-shaped diffuse subzones, $m' \geq 1$, $m'' \geq 1$, $m''' \geq 1$, ... of at least one mutually different ring-shaped structure of said plurality of ring-shaped structures.

Preferably, the method configured for calculating, by a computer, data of the spectacle lens for the purpose of the use of the data for the manufacture of the spectacle lens, the spectacle lens comprising the plurality of ring-shaped structures, is characterized in at least one of

- determining a width of k different ring-shaped diffuse subzones of the n ring-shaped diffuse subzones, n > 1, to be equal in a direction perpendicular to the circumferential direction of a same ring-shaped structure of the plurality of ring-shaped structures, and
- determining a number l of l different segment-shaped diffuse subzones of said m segment-shaped diffuse subzones, m > 1, to be repeated along the circumferential direction of a same ring-shaped structure of the plurality of ring-shaped structures.

With respect to the before described method, reference is made to the before-given definitions and the before-given explanations of the benefits.

The computer program comprising instructions which, when the program is executed by a computer, cause the computer to carry out the method described before.

The computer program may be stored on a non-transitory tangible computer-readable storage medium, the computer program comprising instructions which, when the program is executed by a computer, cause the computer to carry out the method described before.

The computer-readable storage medium having stored thereon the computer program.

The computer-readable storage medium may be a non-transitory computer-readable storage medium.

The data signal carrying the computer program.

The method described before being further configured for manufacturing the spectacle lens based on the data of the spectacle lens.

Preferably, the method is characterized by the step of manufacturing the spectacle lens based on the data of the spectacle lens. In other words, preferably, the method is characterized by the step of manufacturing the spectacle lens using the data of the spectacle lens which has been calculated by the method described before for the purpose of a use of the data for a manufacture of the spectacle lens.

The computer being configured to perform the method described before.

The computer may be a data processing system comprising a processor and a storage medium coupled to the processor, wherein the processor is adapted to perform the method described before based on a computer program stored on the storage medium.

In the Figures:

Figure 1 shows a spectacle lens 100 comprising a connected zone 101 and a plurality of ring-shaped structures 102 having a surface power different to the surface of the spectacle lens comprising said plurality of structures outside a respective domain occupied by each of said plurality of structures. A same ring-shaped structure of said plurality of ring-shaped structures 102 comprises m segment-shaped diffuse subzones 103, m > 1. Each ring-shaped structure of the plurality of ring-shaped structures 102 is a closed ring. The m segment-shaped diffuse subzones 103, m> 1, have a diffuse transmittance that is different to the diffuse transmittance of said same ring-shaped structure of said plurality of ring-shaped structures 102.

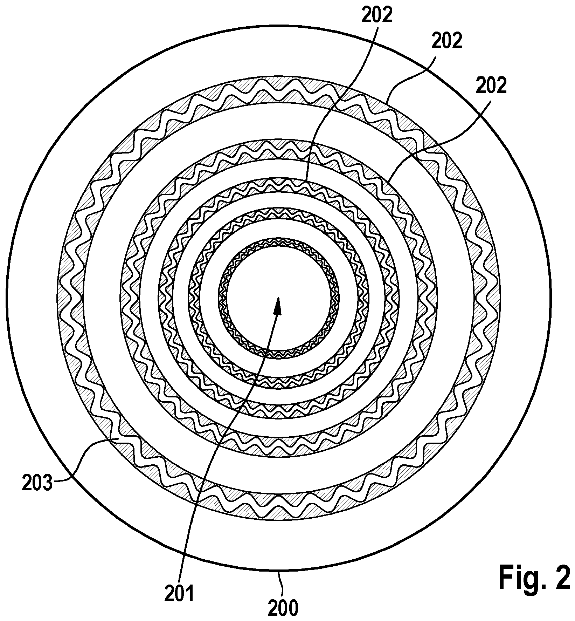

Figure 2 shows a spectacle lens 200 comprising a connected zone 201 and a plurality of ring-shaped structures 202 having a surface power different to the surface of the spectacle lens comprising said plurality of structures outside a respective domain occupied by each of said plurality of structures. A same ring-shaped structure of said plurality of ring-shaped structures 202 comprises n ring-shaped diffuse subzones 203, n = 1. The n ring-shaped diffuse subzones 203, n = 1, have a diffuse transmittance that is different to the diffuse transmittance of said same ring-shaped structure of said plurality of ring-shaped structures 202.

**Claims**

1. Spectacle lens (100, 200) comprising a connected zone (101, 201) and a plurality of ring-shaped structures (102, 202), said connected zone (101, 201) surrounding an optical centre of the spectacle lens or a fitting point of the spectacle lens, said optical centre as defined in ISO 13666:2019(E), entry 3.2.15, said fitting point of said spectacle lens as defined in ISO 13666:2019(E), entry 3.2.34, each ring-shaped structure of said plurality of ring-shaped structures (102, 202) having a surface power that is different to a surface power of a surface of the spectacle lens comprising a ring-shaped structure of said plurality of ring-shaped structures outside a respective domain of each ring-shaped structure of said plurality of ring-shaped structures (102, 202), **characterized in that** said ring-shaped structure of said plurality of ring-shaped structures comprises a diffuse zone having a diffuse transmittance that is different to a diffuse transmittance of said ring-shaped structure of said plurality of ring-shaped structures, diffuse transmittance as defined in CIE S 017:2020, entry 17-24-069.

2. Spectacle lens (100, 200) according to claim 1, **characterized in that** said diffuse zone induces a wide angle scatter or a narrow angle scatter, wide angle scatter as defined in ISO 4007:2018(E), entry 3.8.16, narrow angle scatter as defined in ISO 4007:2018(E), entry 3.8.15.

3. Spectacle lens (100, 200) according to any one of claims 1 and 2, **characterized in that** said diffuse zone having said diffuse transmittance that is different to said diffuse transmittance of said ring-shaped structure of said plurality of ring-shaped structures (102, 202) comprises at least one of

   - n ring-shaped diffuse subzones (203), n ≥ 1, each ring-shaped diffuse subzone of said n ring-shaped diffuse subzones (203) having a diffuse transmittance that is different to said diffuse transmittance of said ring-shaped structure of said plurality of ring-shaped structures (202),
   - m segment-shaped diffuse subzones (103), m ≥ 1, each segment-shaped diffuse subzone of said m segment-shaped diffuse subzones (103) having a diffuse transmittance that is different to said diffuse transmittance of said ring-shaped structure of said plurality of ring-shaped structures (102).

4. Spectacle lens (100, 200) according to claim 3, **characterized in that**

   i) a ratio of a sum of areas of ring-shaped domains of said n ring-shaped diffuse subzones (203), n ≥ 1, of said ring-shaped structure divided by an area of a domain of said ring-shaped structure, or
   ii) a ratio of a sum of areas of segment-shaped domains of said m segment-shaped diffuse subzones (103), m ≥ 1, of said ring-shaped structure divided by an area of a domain of said ring-shaped structure, or
   iii) a ratio of a total sum of areas of domains divided by an area of a domain of said ring-shaped structure, said total sum of areas of domains summing up a sum of areas of ring-shaped domains of said n ring-shaped diffuse subzones (203), n ≥ 1, of said same ring-shaped structure and a sum of areas of segment-shaped domains of said m segment-shaped diffuse subzones 103, m ≥ 1, of said ring-shaped structure,

each is selected from one range of the following ranges:

- a range of from 20% to 70%,
- a range of from 25% to 65%,
- a range of from 30% to 60%,
- a range of from 32% to 55%,
- a range of from 35% to 53%.

5. Spectacle lens (100, 200) according to any one of the preceding claims 3 and 4, **characterized in that** said ring-shaped structure of said plurality of ring-shaped structures (102, 202) has a surface mean power that is not constant along a ring-shaped path of said ring-shaped structure.

6. Spectacle lens (100, 200) according to any one of the preceding claims 3 to 5, **characterized in that** at least one of

- a start of a segment-shaped diffuse subzone m of said m segment-shaped diffuse subzones (103), m ≥ 1, of said ring-shaped structure is displaced along a circumferential direction relative to a start of a segment-shaped diffuse subzone m', m", m'", ... of m', m", m'", ... segment-shaped diffuse subzones (103), m' ≥ 1, m" ≥ 1, m'" ≥ 1, ... of at least one mutually different ring-shaped structure of said plurality of ring-shaped structures (102) and
- an end of a segment-shaped diffuse subzone m of said m segment-shaped diffuse subzones (103), m ≥ 1, of said ring-shaped structure is displaced along a circumferential direction relative to an end of a segment-shaped diffuse subzone m', m", m'", ... of m', m", m'", ... segment-shaped diffuse subzones (103), m' ≥ 1, m" ≥ 1, m'" ≥ 1, ... of at least one mutually different ring-shaped structure of said plurality of ring-shaped structures (102).

7. Spectacle lens (100, 200) according to 3 to 6, **characterized in that** at least one of

- a number n of said n ring-shaped diffuse subzones (203), n ≥ 1, of said ring-shaped structure is equal or different to a number n', n", n'"... of n', n", n'", ... ring-shaped diffuse subzones (203), n' ≥ 1, n" ≥ 1, n'" ≥ 1, of at least one mutually different ring-shaped structure of said plurality of ring-shaped structure (202), and
- a number m of said m segment-shaped diffuse subzones (103), m ≥ 1, of said ring-shaped structure is equal or different to a number m', m", m'", ... of said m', m", m'", ... segment-shaped diffuse subzones (103), m' ≥ 1, m" ≥ 1, m'" ≥ 1, ... of at least one mutually different ring-shaped structure of said plurality of ring-shaped structures (102).

8. Spectacle lens (100, 200) according to any one of the preceding claims 3 to 7, **characterized in that** at least one of

- a width of k different ring-shaped diffuse subzones of said n ring-shaped diffuse subzones (203), n > 1, is equal in a direction perpendicular to the circumferential direction of said ring-shaped structure, and
- a number l of l different segment-shaped diffuse subzones of said m segment-shaped diffuse subzones (103), m > 1, is repeated along the circumferential direction of said ring-shaped structure.

9. Data set comprising at least one kind of the following kinds of data:

(i) data of the spectacle lens (100, 200) according to any one of the preceding claims 1 to 8, the data of the spectacle lens being configured for the purpose of a use for a manufacture of the spectacle lens (100, 200) according to any one of the preceding claims 1 to 8,
(ii) data containing computer-readable instructions for controlling one or more manufacturing machines in order to produce the spectacle lens (100, 200) according to any one of the preceding claims 1 to 8.

10. Method being configured for calculating, by a computer, data of a spectacle lens for the purpose of a use of the data for a manufacture of the spectacle lens (100, 200), the spectacle lens (100, 200) comprising a plurality of ring-shaped structures (102, 202),
the method being **characterized in**

- determining a domain or a plurality of domains of a diffuse zone within a domain of a same ring-shaped structure of said plurality of ring-shaped structures (102, 202), the domain or the plurality of domains of the diffuse zone having a diffuse transmittance that is different to a diffuse transmittance of said domain of said same ring-shaped structure of said plurality of ring-shaped structures (102, 202) outside the domain or the plurality of domains of the diffuse zone, diffuse transmittance as defined in CIE S 017:2020, entry 17-24-069.

11. Computer program comprising instructions which, when the program is executed by a computer, cause the computer to carry out the method of claim 10.

12. Computer-readable storage medium having stored thereon the computer program of claim 11.

13. Data signal carrying the computer program of claim 11.

14. Method according to claim 10 being further configured for manufacturing the spectacle lens based on the data of the spectacle lens.

15. Computer being configured to perform the method according to claim 10.

Fig. 1

**Fig. 2**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/031798 A1 (SAHA SOURAV [US] ET AL) 2 February 2023 (2023-02-02) * paragraphs [0034], [0041]; figures 3A-3C, 9 * | 1-15 | INV.<br>G02C7/02 |
| A | EP 4 328 658 A1 (ZEISS CARL VISION INT GMBH [DE]) 28 February 2024 (2024-02-28) * page 1, paragraphs 0029-0031, 00095, 0098, 0100,; claim 1; figure 1 * | 1-15 | |
| A,D | WO 2023/156052 A1 (ZEISS CARL VISION INT GMBH [DE]) 24 August 2023 (2023-08-24) * page 3, line 35 - page 4, line 21; figures 3, 4 * | 1-15 | |
| A | US 2023/384617 A1 (BURGOS MONTSERRAT [FR] ET AL) 30 November 2023 (2023-11-30) * paragraphs [0070], [0090], [0108], [0109], [0114]; figure 3 * | 1-15 | |
| A,D | WO 2020/180817 A1 (SIGHTGLASS VISION INC [US]) 10 September 2020 (2020-09-10) * page 16, line 11 - line 13 * * page 17, line 25 - page 18, line 2 * * page 25, line 16 - line 20 * * page 28, line 32 - page 29, line 11 * * page 32, line 7 - page 33, line 7 * | 1-15 | **TECHNICAL FIELDS SEARCHED (IPC)**<br><br>G02C |
| A | CN 217 425 856 U (ZHUHAI FEITELAN MEDICAL TECH CO LTD) 13 September 2022 (2022-09-13) * figures 2-4; example 1 * | 1-15 | |

The present search report has been drawn up for all claims

| Place of search | Date of completion of the search | Examiner |
|---|---|---|
| Munich | 9 January 2025 | Vazquez Martinez, D |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 3160

This annex lists the patent family members relating to the patent documents cited in  the above-mentioned European search report.
The members are as contained in the European Patent Office EDP file on
The European Patent Office is in no way liable for these particulars which are merely given for the purpose of information.

09-01-2025

| Patent document cited in search report | | | Publication date | Patent family member(s) | | Publication date |
|---|---|---|---|---|---|---|
| US 2023031798 | A1 | | 02-02-2023 | AU | 2022317315 A1 | 04-01-2024 |
| | | | | CA | 3226877 A1 | 02-02-2023 |
| | | | | CN | 117642653 A | 01-03-2024 |
| | | | | EP | 4363908 A1 | 08-05-2024 |
| | | | | GB | 2611164 A | 29-03-2023 |
| | | | | JP | 2024524760 A | 05-07-2024 |
| | | | | KR | 20240038776 A | 25-03-2024 |
| | | | | TW | 202321782 A | 01-06-2023 |
| | | | | US | 2023031798 A1 | 02-02-2023 |
| | | | | WO | 2023007158 A1 | 02-02-2023 |
| EP 4328658 | A1 | | 28-02-2024 | NONE | | |
| WO 2023156052 | A1 | | 24-08-2023 | CN | 119013610 A | 22-11-2024 |
| | | | | EP | 4479794 A1 | 25-12-2024 |
| | | | | US | 2024393615 A1 | 28-11-2024 |
| | | | | WO | 2023155984 A1 | 24-08-2023 |
| | | | | WO | 2023156052 A1 | 24-08-2023 |
| US 2023384617 | A1 | | 30-11-2023 | CN | 116324594 A | 23-06-2023 |
| | | | | EP | 4226207 A1 | 16-08-2023 |
| | | | | US | 2023384617 A1 | 30-11-2023 |
| | | | | WO | 2022074243 A1 | 14-04-2022 |
| WO 2020180817 | A1 | | 10-09-2020 | CN | 113661434 A | 16-11-2021 |
| | | | | EP | 3931626 A1 | 05-01-2022 |
| | | | | US | 2022146857 A1 | 12-05-2022 |
| | | | | WO | 2020180817 A1 | 10-09-2020 |
| CN 217425856 | U | | 13-09-2022 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023156052 A1
- WO 2020180817 A1
- WO 2023156052 A2